# EUROPEAN PATENT SPECIFICATION

(11) **EP 1 448 069 B1**
(45) Date of publication and mention of the grant of the patent: **03.06.2009**
(21) Application number: 02803120.1
(22) Date of filing: 14.11.2002
(51) Int. Cl.: A23L 3/3463

(54) **DETERIORATION PREVENTIVE AGENT**
MITTEL ZUM SCHUTZ GEGEN VERDERB
AGENT ANTI-DEGRADATION

(30) Priority: 15.11.2001 JP 2001349800; 15.11.2001 JP 2001349799
(43) Date of publication of application: 25.08.2004
(73) Proprietor: Takasago International Corporation, Tokyo 144-8721 (JP)
(72) Inventor: HIRAMOTO, Tadahiro, c/o Takasago Int. Corp., Hiratsuka-shi, Kanagawa 254-0073 (JP); ARAI, Haruo, c/o Takasago Int. Corp., Hiratsuka-shi, Kanagawa 254-0073 (JP); SAIMA, Toshinori, c/o Takasago Int. Corp., Hiratsuka-shi, Kanagawa 254-0073 (JP); OTSUKA, Masashi, c/o Takasago Int. Corp., Hiratsuka-shi, Kanagawa 254-0073 (JP)
(74) Representative: Uchida, Kenji
(86) International application number: PCT/JP2002/011895
(87) International publication number: WO 2003/041517

(56) References cited:
- EP-A- 0 875 232
- EP-A- 0 897 671
- EP-A- 1 254 651
- WO-A-00/57841
- WO-A-01/32029
- WO-A-01/79400
- WO-A-99/18811
- GB-A- 884 688
- US-A- 4 234 577
- US-A- 5 156 866
- US-A- 6 129 944
- PATENT ABSTRACTS OF JAPAN vol. 006, no. 208 (C-130), 20 October 1982 (1982-10-20) -& JP 57 115147 A (SANEI KAGAKU KOGYO KK), 17 July 1982 (1982-07-17)
- DATABASE WPI Section Ch, Week 198732 Derwent Publications Ltd., London, GB; Class B05, AN 1987-224314 XP002229810 -& JP 62 148424 A (RIKEN VITAMIN CO), 2 July 1987 (1987-07-02)
- PATENT ABSTRACTS OF JAPAN vol. 005, no. 102 (C-061), 2 July 1981 (1981-07-02) -& JP 56 042546 A (NISSHIN OIL MILLS LTD:THE), 20 April 1981 (1981-04-20)

## Description

### Technical Field

The present invention relates to a deterioration preventive agent, which is useful for preventing deterioration of foods and fragrance-containing products. More specifically, the present invention relates to a food-deterioration preventive agent and a deterioration preventive agent for fragrance-containing products, which contains a sterol as the active ingredient.

### Background Art

In general, foods are influenced by light, heat, air and so forth during each stage of the manufacturing process, distribution process and storage, and various problems result in. For example, problems caused by loss of taste and flavor inherent in the foods themselves over the course of time and generation of peculiar taste and odor due to deterioration of internal ingredients, are pointed out.

In order to eliminate these inconveniences, the addition and blending of so-called stabilizers into foods is known, and attempts have been made to blend stabilizers such as chlorogenic acid, α-tocopherol and vitamin C into foods. However, these stabilizers are unable to stabilize foods to a satisfactory degree.

WO-A-0179400 discloses the use of phytosterols as antioxidants for deterioration prevention in food and cosmetics. The phytosterols (plant source) disclosed have the same skeleton structure as formula 1.

US-A-4234577 discloses antioxidant compositions comprising sterols with the same skeleton structure as formula 1, and their addition to food products to protect against oxidation.

EP-A-0875232 discloses adding, to perfume-containing cosmetics, a sterol composition with the same skeleton structure as formula 1.

JP-A-62148424 discloses adding a sterol-containing composition to food products or chemicals, to prevent deterioration.

JP-A-56042546 discloses a combined use of a phytosterol and a sucrose fatty acid ester to prevent the feathering phenomenon of a coffee whitener.

WO-A-9918811 discloses the use of flavonoids as warmed-over flavor inhibiting substances.

GB-A-884688 discloses a composition for conditioning the skin and retarding the rate of moisture loss, comprising inter alia some sterols. EP-A-0897671 discloses an aqueous phase dispersion or suspension comprising high melting lipids, e.g. phytosterols, and a non-sterol emulsifier.

For the purpose of satisfying consumer's preference, it is common to add perfumes to various products such as oral care products and toiletry products.

However, the fragrance-containing products are influenced by light, heat, air and so forth during each stage of the manufacturing process, distribution process and storage, and various problems, e.g., change of quality of aroma and disappearance of the aroma in some cases, result in. Also, in the case that fragrance-containing products themselves are made alkaline, many fragrance components have a defect that they are susceptive to alkaline condition, so that problems, e.g., loss of quality of aroma over the course of time, are pointed out.

In order to eliminate these inconveniences, the addition and blending of so-called stabilizers into fragrance-containing products is known, and attempts have been made to blend stabilizers such as vitamin E, dibutylhydroxyanisole (BHA) and dibutylhydroxytoluene (BHT) into fragrance-containing products.

However, these stabilizers are unable to stabilize fragrance-containing products to a satisfactory degree. In particular, when the fragrance-containing products themselves are made alkaline, the stabilizers stabilize the products to only a small degree.

Attempts have been made to prevent deterioration of fragrances by employing fragrance compounds resistant to alkaline conditions. In fact, a certain effect is attained, but it is pointed out that there are a small number of fragrance compounds resistant to alkaline conditions and hence it is impossible to satisfy diversified preference of consumers.

### Disclosure of the Invention

It is an object of the invention to provide a food-deterioration preventive agent and a deterioration preventive agent for fragrance-containing products, which provide excellent quality retention effects on foods and fragrance-containing products and also are gentle to the environment and people. Also, it is an object of the invention to provide a deterioration preventive agent excellent in an effect to prevent the deterioration of dough of foods and flavors in foods or flavors that are to be newly added and blended into foods. Furthermore, it is an object of the invention to provide a deterioration preventive agent excellent in an effect to prevent the deterioration of perfumes to be added and blended into various products.

As a result of intensive studies to overcome the above problems, the present inventors have found that sterols provide excellent deterioration preventive effects on foods and fragrance-containing products, and they have carried out further investigation to accomplish the invention.

To this end, there is provided a use of a sterol having a skeleton represented by the following formula 1: 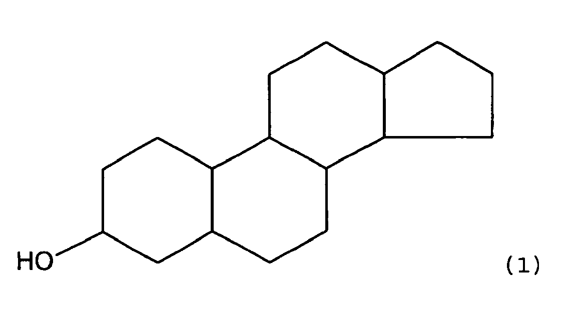 as a deterioration preventive agent for perfume-containing products in alkaline conditions.

Preferably, the sterol is obtained from:
- a vegetable selected from the group consisting of Japanese radish leaves, lettuce, asparagus, cucumber, egg bonnet, oriental pickling melon, garlic, horsetail and Japanese ginger, grains or plant seeds such as unpolished rice, rice bran, buckwheat, sesame seeds, sunflower seeds, walnuts, peanuts and rapeseeds, soybean or soybean-derived products such as bean-curd refuse, rice oil, sesame oil, rape oil, cottonseed oil, olive oil, soybean oil, palm oil, coconut oil;
- a yeast;
- an animal oil selected from the group consisting of whale and tallow; or
- a fish oil.

Preferably still, the sterol has 27 to 30 carbon atoms.

Typically, the sterol is sito sterol, stigma-sterol, campe-sterol, spinasterol or brassica-sterol, or glycerides thereof.

The above perfume-containing product may be a food.

Suitably, the above-mentioned food is a drink, a frozen confection, a dessert, a fermented milk food, a dairy product, a confection or a fish paste.

Further, the above-mentioned perfume-containing product may be a cosmetic, a toiletry product, a domestic cleaning product, a detergent for lavatories, a detergent for bathrooms, a powder detergent for washing, a detergent for automatic dishwasher, a fabric softener or a deodorant.

Typically, the cosmetic is a perfume.

### Brief Description of the Drawing

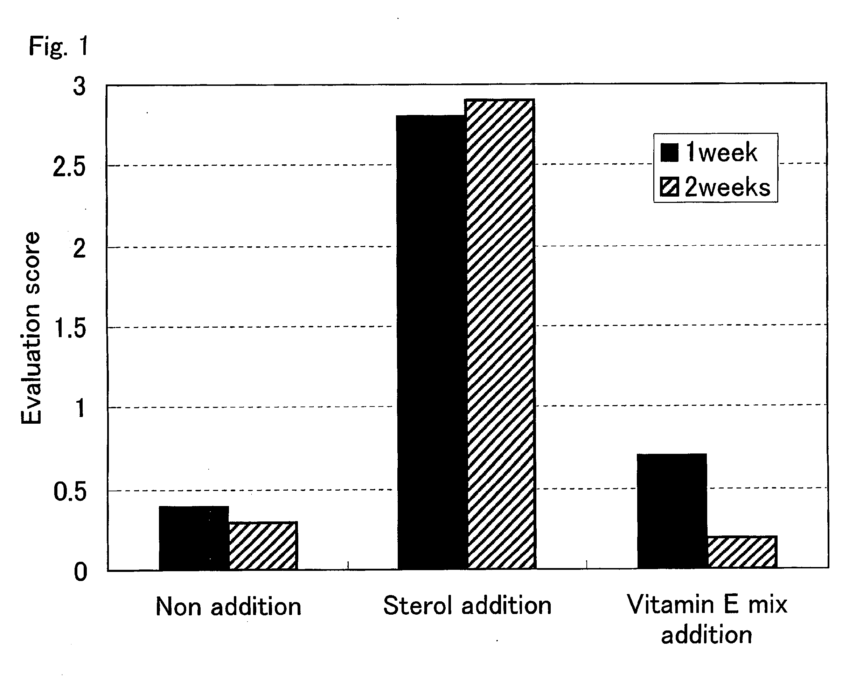

FIG. 1 is a bar chart illustrating the result of sensory evaluation with regard to the samples prepared in Example 8, Comparative Example 5 and Comparative Example 6.

### Best Mode For Carrying Out the Invention

The following will explain the present invention in detail.

The deterioration preventive agent of the invention contains a sterol as the active ingredient. The deterioration preventive agent is excellent in an effect to prevent the deterioration of perfumes such as flavor and fragrance. Also, the deterioration preventive agent is useful as a food-deterioration preventive agent or a deterioration preventive agent for fragrance-containing products.

The sterol is excellent in an effect to prevent the deterioration of dough in foods or flavors of foods or flavors that are to be newly added and blended to foods. Thereby, the foods blended with the food-deterioration preventive agent containing the sterol as the active ingredient can realize long-term quality retention. The dough herein means an unscented food, i.e., the food before a flavor is added thereto.

Moreover, the sterol is excellent in an effect to prevent the deterioration of fragrance to be added and blended to fragrance-containing products. Thereby, the fragrance-containing products blended with the deterioration preventive agent for fragrance-containing products containing the sterol as the active ingredient can realize long-term quality retention. In this connection, said fragrance-containing products mean products to which fragrances are added and blended for improving consumer's satisfaction, such as so-called detergents, bleaching agents and toiletry products, for example, below-mentioned products as specific examples.

The sterols used in the invention include all the compounds having a skeleton represented by the following formula 1. The sterols include, for example, the compound represented by the formula 1, derivatives of the compound represented by the formula 1, glycosides thereof, or mixtures thereof. Herein, the derivatives include compounds wherein hydrogen atom(s) of each of the compounds represented by the formula 1 are substituted by organic group(s) such as alkyl group(s).

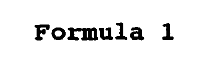

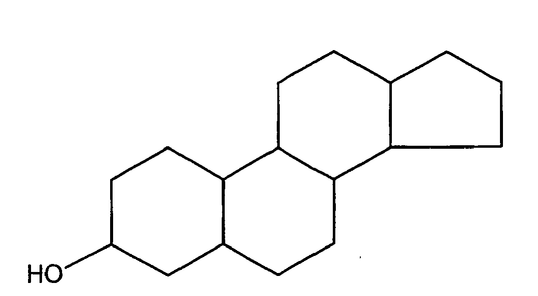

Of these compounds, preferred are compounds having the above skeleton and having 27 to 30 carbon atoms, and more preferred are compounds having the above skeleton and having 27 to 29 carbon atoms.

The sterols used in the invention may be widely present in plants, animal tissues, and microorganisms.

Representative plants containing sterol(s) include vegetables such as Japanese radish leaves, lettuce, asparagus, cucumber, egg bonnet, oriental pickling melon, garlic, horsetail and Japanese ginger, grains or plant seeds such as unpolished rice, rice bran, buckwheat, sesame seeds, sunflower seeds, walnuts, peanuts and rapeseeds, soybean or soybean-derived products such as bean-curd refuse, rice oil, sesame oil, rape oil, cottonseed oil, olive oil, soybean oil, palm oil, coconut oil, and the like.

Microorganisms containing sterol(s) include yeast and the like.

Animal tissues containing sterol(s) include fish oils, animal oils such as whale, tallow, and the like.

As the sterols present in plants, stigma-sterol, sito sterol, campe-sterol, spina-sterol, brassica sterol, and the like can be referred to.

As the sterols present in microorganisms, ergosterols and the like can be referred to.

As the sterols present in animals, cholesterol and the like can be referred to.

Of these, preferred are sterols derived from plants and microorganisms in view of food deterioration preventive ability, fragrance-containing products deterioration preventive ability and easiness of preparation. In particular, phytosterols are preferred, and specific examples of the preferred sterols include phytosterols such as sito sterol, stigma-sterol, campesterol, spina-sterol and brassica-sterol, or glycerides thereof.

The sterols used in the invention may be commercially available products or may be prepared by a conventional method such as molecular distillation or extraction using animal tissues, plants and microorganisms containing the above sterols as starting materials. Also, the above sterols are main components of unsaponifiable matter of animal and vegetable oils and fats, and hence the sterols may be prepared from them by said conventional method.

When the sterols are prepared using leaves and stems of plants, plant seeds or the like as starting materials, the materials are generally subjected to pre-treatment. The pre-treatment includes, for example, a method wherein starting materials are dried and then finely crushed. Subsequently, the thus treated starting materials are brought into contact with a solvent to transfer the sterols to the solvent layer. Examples of the solvent include hydrocarbons such as toluene, hexane, benzene and petroleum ether, halogenated hydrocarbons such as chloroform, esters such as ethyl acetate, and alcohols such as ethanol and methanol. These solvents may be used alone or as mixtures of two or more of them, such as a mixed solvent of chloroform/methanol. Of these solvents, preferred are a mixed solvent of chloroform/methanol and alcohols such as ethanol, and particularly preferred is ethanol.

Moreover, from scum (deodorized concentrate) formed at purification of vegetable oils such as soybean oil and cottonseed oil and by-product at purification of tall oil, sterols may be prepared by a usual method. As examples of the method used in the invention, JP-B-40-17599 discloses a deodorizing treatment of a crude vegetable oil obtained by solvent extraction. When the method is carried out, that is, steam is blown into the above crude vegetable oil under high temperature and high pressure, scum is produced and sterols can be precipitated and separated from the scum using hexane, methanol or the like.

When sterols are prepared using unsaponified matter of animal and vegetable oils and fats, as starting materials, it is usually subjected to pre-treatment such as saponification to remove reaction products, and then sterols are transferred to a solvent layer by contact with solvent. The operations thereafter are basically the same as the operations in the case of solvent extraction using a plant containing the above sterols as the starting material.

As an alternative method, the operations wherein sterols are prepared using for example wool wax (lanolin) or the like as a starting material are basically the same as the operations in the case of solvent extraction using a plant containing the above sterols as the starting material.

Thus obtained solvent containing sterol(s) may be used as a deterioration preventive agent such as a food-deterioration preventive agent or a deterioration preventive agent for fragrance-containing products, as it is. However, more preferred deterioration preventive agent such as food-deterioration preventive agent or deterioration preventive agent for fragrance-containing products of the invention is prepared by heating and evaporating the solvent to obtain a concentrate and then applying a usual purification method.

The purification method include, for example, a silica gel column chromatography. As the method, there may be adopted a method wherein the above concentrate is poured into a column packed with silica gel beforehand to load the concentrate on the silica gel and then eluent composed of solvent(s) is poured into the column to elute retained matter together with the solvent(s), and the eluting solvent(s) are separated into several fractions by a known means. As the solvent(s), there may be used hydrocarbons such as n-pentane, n-hexane, branched hexanes, benzene and toluene, ethers such as ethyl ether, esters such as ethyl acetate and methyl acetate, alcohols such as methanol, ethanol, n-propanol and 2-propanol, and the like. These solvents may be used alone or as mixtures of two or more of them. In the case that usual silica gel column chromatography is used, elution with hexane, ethyl acetate or a mixed solvent thereof is preferred. In the case that a mixed solvent is used, the mixing ratio of each of the solvents is not particularly limited. The elution is usually carried out at room temperature but the temperature is not particularly limited, and the elution may be also carried out under a low temperature or under a high temperature.

Thus obtained deterioration preventive agent of the invention containing a sterol is useful as a food-deterioration preventive agent or a deterioration preventive agent for fragrance-containing products.

The food-deterioration preventive agent of the invention can realize the retention of the quality of foods by adding and blending the food-deterioration preventive agent into foods.

Examples of foods whose deterioration can be prevented by adding and blending into the foods, as the food-deterioration preventive agent of the invention, include drinks such as non-fruit juice drinks, fruit juice drinks, lactobacillus drinks, powder drinks, tea drinks and coffee drinks, frozen confections such as ice cream, sherbet and ice confections, desserts such as pudding, jelly and Bavarian cream, fermented milk foods such as hard yogurt, soft yogurt, yogurt drinks and frozen yogurt, dairy products such as butter, margarine and cheese, confections such as gum, pies and candy, fish pastes, and the like.

Although the amount of food-deterioration preventive agent blended in the foods varies depending on the kind of foods, it is normally added in an amount of 0.1 ppm to 1% by weight, preferably added in an amount of 1 ppm to 0.1% by weight, in the products.

At adding and blending of the food-deterioration preventive agent of the invention, a method may be used in which it is added and blended directly into the above objective foods or a method may be used in which a solution or dispersion of the food-deterioration preventive agent is preliminarily prepared and then this solution or dispersion is added and blended into the foods. In the invention, the latter method is preferred. Various additives such as thickeners and antioxidants may be present beforehand in this solution or dispersion.

Examples of medium used to obtain the above solution or dispersion include alcohols such as ethanol, medium chain fatty acid esters of glycerin or the like, purified vegetable oils such as coconut oil and corn salad oil, and edible oils.

Although the amount of the food-deterioration preventive agent to be added to the medium varies considerably depending on the food to which the agent is added and blended, and so forth, the amount is, for example, from 10 ppm to 50% by weight.

In the deterioration preventive agent for fragrance-containing products of the invention, examples of representative fragrances whose deterioration can be prevented by the deterioration preventive agent for fragrance-containing products include citrus-base, fruit-base and mint-base fragrances. Also, fragrances each containing an aliphatic aldehyde as the main fragrant component may be mentioned.

The deterioration preventive agent for fragrance-containing products of the invention exhibits an effect that the quality of fragrance-containing products can be retained by adding and blending the deterioration preventive agent for fragrance-containing products into fragrance-containing products.

Examples of fragrance-containing products whose deterioration can be prevented by adding and blending, into the fragrance-containing products, the deterioration preventive agent for fragrance-containing products of the invention include cosmetics such as fragrance, skin care, make-up, hair cosmetics, toiletry products such as shampoos, hair treatments, body shampoos, solid soaps, bath agents, toothpastes, tooth liquid, and mouthwashes, domestic cleaning products, detergents for lavatories, detergents for bathrooms, powder detergents for washing, detergents for automatic dishwasher, fabric softeners and deodorants.

Although the amount of deterioration preventive agent for fragrance-containing products blended in the fragrance-containing products varies depending on the kind of fragrance-containing products, it is normally added in an amount of 0.01 ppm to 1% by weight, preferably added in an amount of 0.1 ppm to 1% by weight, and more preferably added in an amount of 1 ppm to 0.1% by weight, in the products.

At adding and blending of the deterioration preventive agent for fragrance-containing products of the invention, a method may be used in which it is added and blended directly into the above objective fragrance-containing products or a method may be used in which a solution or dispersion of the deterioration preventive agent for fragrance-containing products is preliminarily prepared and then this solution or dispersion is added and blended into the fragrance-containing products. In the invention, the latter method is preferred. Various additives such as thickeners and antioxidants may be present beforehand in this solution or dispersion.

Examples of medium used to obtain the above solution or dispersion include alcohols such as ethanol, medium chain fatty acid esters of dipropylene glycol, glycerin or the like, purified vegetable oils such as coconut oil and corn salad oil, and edible oils.

Although the amount of the deterioration preventive agent for fragrance-containing products to be added to the medium varies considerably depending on the fragrance-containing product to which the agent is added and blended, and so forth, the amount is, for example, from 10 ppm to 50% by weight%.

### EXAMPLES

The following will explain the present invention further in detail with reference to Examples and Comparative Examples, but the invention is not limited to these Examples.

### Example 1

### Preparation of a solution containing a deterioration preventive agent from rice bran

Rice bran (1 kg) was immersed or gently stirred in ethyl acetate (5 L) at 50°C for 3 hours. After filtration, the filtrate was concentrated using an evaporator. The concentrate was charged on a silica gel column (2 kg of silica gel was packed), and then eluted with 10 L of 10% ethyl acetate/n-hexane solution (volume ratio). Subsequently, it was eluted with 10 L of 25% ethyl acetate/n-hexane solution (volume ratio) and the eluate was concentrated to dryness using an evaporator. The concentrate was dissolved into ethanol to prepare a solution having a final concentration of 10%, whereby a deterioration preventive agent (a) was obtained.

Yield was 8.9% (in terms of solid matter, based on rice bran) and sterol content was 9.3%.

### Example 2

Commercially available phytosterol (manufactured by Nacalai Tesque, Inc., a product derived from soybean) was dissolved in ethanol to prepare a solution having a final concentration of 1%, whereby a deterioration preventive agent (b) was obtained.

### Example 3

Food-deterioration preventive ability of the deterioration preventive agent (a) of Example 1 was evaluated with the following samples.

### a) Preparation of samples for evaluation

Water (1000 g) was added to Yabukita tea leaves (40 g) produced in Shizuoka, Japan, followed by 3 minutes of stirring and extraction at 60°C. Samples for evaluation were prepared by adding vitamin C (0.01%) and the deterioration preventive agent (a) (0.01 or 0.1% by weight) to the filtrate obtained by filtration to remove the tea leaves, then adjusting Brix. to 0.2 upon adding water, and adjusting pH to 6.2 with sodium hydrogen carbonate.

In this connection, for light-aging test, the sample was sterilized by packing it in a transparent PET container, followed by immersion at 80°C for 10 minutes. Also, for heat-aging test, the sample was sterilized by packing it in a can container, followed by retort sterilization at 121°C for 10 minutes.

### b) Evaluation methods

### b-1) Evaluation with regard to change over the course of time

The above samples were subjected to heat-aging and light-aging tests under the following conditions. Heat-aging test conditions
Temperature: 55°C
Duration: storage for 2 weeks (under light shielding)
Light-aging test conditions
   Temperature: 20°C
   Light irradiation: 15,000 lux
   Duration: for 6 days

After the tests were finished, the taste and aroma of the samples used in the aging tests were subjected to sensory evaluation by 7 expert panelists. The results are shown in Tables 1 and 2.

### Sensory evaluation

A) Excellent: hardly any change in taste and aroma
B) Good: some change in taste and aroma
C) Fairly good: definite change in taste and aroma
D) No good: drastic change in taste and aroma

### Example 4

Food-deterioration preventive ability of the deterioration preventive agent (b) of Example 2 was evaluated with the following samples.

### a) Preparation of samples for evaluation

Samples for evaluation were prepared in the same manner as in Example 3 with the exception that the deterioration preventive agent (b) of Example 2 (0.001, 0.01 or 0.1% by weight) was added instead of the deterioration preventive agent (a) of Example 1.

### b) Evaluation methods

The taste and aroma of the samples were subjected to sensory evaluation in the same manner as in Example 3. The results are shown in Tables 1 and 2.

### Comparative Example 1 (Control)

Samples were prepared in the same manner as in Example 3 with the exception that ethanol was added in an amount of 0.1% instead of the deterioration preventive agent (a). These samples were subjected to sensory evaluation under the same conditions as in Example 3. The results are shown in Tables 1 and 2.

### Comparative Example 2

Samples were prepared in the same manner as in Example 3 with the exception that 10% ethanol solution of chlorogenic acid was added in an amount of 0.1% instead of the deterioration preventive agent (a). These samples were subjected to sensory evaluation under the same conditions as in Example 3. The results are shown in Tables 1 and 2.

**Table 1. Light-aging test results**

| | | Added concentration (ppm) | Sensory evaluation 6 days |
|---|---|---|---|
| Comparative Example 1 | Control | - | D (D) |
| Comparative Example 2 | Chlorogenic acid | 100 | D (D) |
| Example 3 | Deterioration preventive agent (a) | 10 | B (B) |
| | | 100 | A (A) |
| Example 4 | Deterioration preventive agent (b) | 0.1 | B (B) |
| | | 1 | A (A) |
| | | 10 | A (A) |

In the table, the "added concentration" means the added concentration in terms of solid matter. Moreover, the character in parenthesis shows evaluation with regard to taste and another shows evaluation with regard to aroma (these shall apply similarly hereinafter).

**Table 2. Heat-aging test results**

| | | Added concentration (ppm) | 1 week | 2 weeks |
|---|---|---|---|---|
| Comparative Example 1 | Control | - | D (D) | D (D) |
| Comparative Example 2 | Chlorogenic acid | 100 | D (D) | D (D) |
| Example 3 | Deterioration preventive agent (a) | 10 | B (B) | B (B) |
| | | 100 | A (A) | A (A) |
| Example 4 | Deterioration preventive agent (b) | 0.1 | B (B) | B (C) |
| | | 1 | A (A) | B (B) |
| | | 10 | A (A) | A (A) |

In the table, the "added concentration" means the added concentration in terms of solid matter.

In both cases of light-aging test and heat-aging test, remarkably good results were obtained in the sensory test of the green tea to which the deterioration preventive agent (a) or (b) was added, as compared with the control plot and the chlorogenic acid-added plot. Particularly, an excellent good-deterioration preventive effect for green tea was observed toward light aging. Namely, in all the deterioration preventive agent-added plots, a deterioration odor was hardly observed and a fresh aroma as tea remained. In addition, in view of taste, the green tea has a little peculiar taste and has the taste of original green tea.

### Example 5

Bean-curd refuse was dried at 50°C over a period of one day and night. The deterioration preventive agent (c) having a final concentration of 10% was prepared from the dried product in the same manner as in Example 1.

Yield was 2.4% (in terms of solid matter, based on bean-curd refuse) and sterol content was 7.9%.

### Example 6

Food-deterioration preventive ability of the deterioration preventive agent (c) of Example 5 was evaluated in the same manner as in Example 3. However, samples were prepared as described in the following and the number of expert panelists was changed from 7 persons to 5 persons.

### a) Preparation of samples for evaluation

Water (1000 g) was added to Yabukita tea leaves (40 g) produced in Shizuoka, followed by 3 minutes of stirring and extraction at 60°C. Samples for evaluation were prepared by adding vitamin C (0.01% by weight), green tea flavor (0.1% by weight) and the deterioration preventive agent (c) of Example 5 (0.01 or 0.1% by weight) to the filtrate obtained by filtration to remove the tea leaves, then adjusting Brix. to 0.2 upon adding water, and adjusting pH to 6.2 with sodium hydrogen carbonate.

In this connection, for light aging test, the samples were sterilized by packing it in a transparent PET container, followed by immersion at 80°C for 10 minutes. Also, for heat aging test, the samples were sterilized by packing it in a can container, followed by retort sterilization at 121°C for 10 minutes.

### b) Evaluation methods

The taste and aroma of the above samples were subjected to sensory evaluation in the same manner as in Example 3. The results are shown in Tables 3 and 4.

### Example 7

Food-deterioration preventive ability of the deterioration preventive agent (b) of Example 2 was evaluated with the following samples.

### a) Preparation of samples for evaluation

Samples for evaluation were prepared in the same manner as in Example 6 with the exception that the deterioration preventive agent (b) of Example 2 was added in an amount of 0.001, 0.01 or 0.1% by weight instead of the deterioration preventive agent (c) of Example 5.

### b) Evaluation methods

The taste and aroma of the samples were subjected to sensory evaluation in the same manner as in Example 6. The results are shown in Tables 3 and 4.

### Comparative Example 3 (Control)

Samples were prepared in the same manner as in Example 6 with the exception that ethanol was added in an amount of 0.1% instead of the deterioration preventive agent (c). These samples were subjected to sensory evaluation under the same conditions as in Example 6. The results are shown in Tables 3 and 4.

### Comparative Example 4

Samples were prepared in the same manner as in Example 6 with the exception that 10% ethanol solution of chlorogenic acid was added in an amount of 0.1% instead of the deterioration preventive agent (c). These samples were subjected to sensory evaluation in the same manner as in Example 6. The results are shown in Tables 3 and 4.

**Table 3. Light-aging test results**

| | | Added concentration (ppm) | Sensory evaluation 6 days |
|---|---|---|---|
| Comparative Example 3 | Control | - | D (D) |
| Comparative Example 4 | Chlorogenic acid | 100 | D (D) |
| Example 6 | Deterioration preventive agent (c) | 10 | B (B) |
| | | 100 | A (A) |
| | Deterioration preventive agent (b) | 0.1 | B (B) |
| Example 7 | | 1 | A (A) |
| | | 10 | A (A) |

In the table, the "added concentration" means the added concentration in terms of solid matter.

**Table 4. Heat-aging test results**

| | | Added concentration (ppm) | Sensory evaluation | |
|---|---|---|---|---|
| | | | 1 week | 2 weeks |
| Comparative Example 3 | Control | - | D (D) | D (D) |
| Comparative Example 4 | Chlorogenic acid | 100 | D (D) | D (D) |
| Example 6 | Deterioration preventive agent (c) | 10 | B (B) | B (B) |
| | | 100 | A (A) | B (B) |
| Example 7 | Deterioration preventive agent (b) | 0.1 | B (B) | B (B) |
| | | 1 | A (A) | B (B) |
| | | 10 | A (A) | B (B) |

In the table, the "added concentration" means the added concentration in terms of solid matter.

In the control plot and the chlorogenic acid-added plot, top note of green tea flavor was considerably decreased by various aging but it remarkably remained in all the deterioration preventive agent-added plots, so that an stabilizing effect to prevent the deterioration of flavor was observed.

### Example 8

Food-deterioration preventive ability of the deterioration preventive agent (b) of Example 2 was evaluated under the following conditions.

### a) Preparation of samples for evaluation

The gum base, powder sugar and starch syrup described in the following formulation were thoroughly kneaded in a kneader. Citric acid was added thereto and the whole was continued to knead. Furthermore, a flavor and a deterioration preventive agent (b) were added thereto and the mixture was continued to knead for thorough mixing (50°C, 30 minutes). The kneaded product was extruded to obtain a chewing gum having width, length and thickness of 20 mm, 70 mm and 2 mm, respectively.

| Chewing gum formulation: | |
|---|---|
| Gum base | 21% |
| Starch syrup | 13% |
| Lemon flavor | 1% |
| Citric acid | 1.4% |
| Deterioration | |
| preventive agent (b) | 0.1% |
| Powder sugar | 63.5% |
| Total | 100.0% |

### b) Evaluation methods

### b-1) Evaluation with regard to change over the course of time

The above sample was subjected to aging test under the following conditions.

### Aging test conditions

Temperature: 40°C
Duration: Storage for 2 weeks (under light shielding)

After the test was finished, the taste and aroma of the samples used in the aging test were subjected to sensory evaluation by 7 expert panelists. The results are shown in Figure 1.

### Sensory evaluation

3 points: hardly any change in flavor or aroma
2 points: some change in taste and aroma
1 point: definite change in taste and aroma
0 point: drastic change in taste and aroma

### Comparative Example 5 (Control)

Samples were prepared in the same manner as in Example 8 with the exception that ethanol was added in an amount of 0.1% instead of the deterioration preventive agent (b). These samples were subjected to sensory evaluation under the same conditions as in Example 8. The results are shown in Figure 1.

### Comparative Example 6

Samples were prepared in the same manner as in Example 8 with the exception that 1% ethanol solution of vitamin E mix was added in an amount of 0.1% instead of the deterioration preventive agent (b). These samples were subjected to sensory evaluation under the same conditions as in Example 8. The results are shown in Figure 1.

As is apparent from Figure 1, the chewing gum of Example 8 to which the deterioration preventive agent (b) is added is definitely superior to the chewing gum of Comparative Example 5 to which no deterioration preventive agent is added and also to the chewing gum of Comparative Example 6 to which vitamin E is added instead of the deterioration preventive agent (b).

### Example 9 (Application to tooth paste)

Food-deterioration preventive ability of the deterioration preventive agent (b) was evaluated under the following conditions.

### a) Preparation of samples for evaluation

To the tooth paste base having the following formulation were added 1.0% by weight of a fruity peppermint-type flavor and 0.001 or 0.01% by weight of the deterioration preventive agent (b) of Example 2, whereby a tooth paste material was obtained. After this material was degassed (100 mmHg, for 10 minutes) under stirring in a stirring swing crusher, it was taken out and packed into a tube made of aluminum in an amount of 15 g per tube, and the tube was tightly closed.

| (% by weight) | |
|---|---|
| Tooth paste base formulation: | |
| Heavy calcium carbonate | 50.00 |
| Glycerin | 25.00 |
| Purified water | 21.80 |
| Carboxymethyl cellulose | 1.50 |
| Sodium lauryl sulfate | 1.40 |
| Saccharin sodium | 0.25 |
| Monosodium benzoate | 0.05 |
| Total | 100.00 |

### (Evaluation method)

The above samples for evaluation were stored in a constant temperature bath at 50°C for 2 weeks.

The samples after storage for 2 weeks were taken out and cooled to room temperature. The content of each tube was squeezed out of the tube onto a drug packing paper, smelled, and teeth was brushed using a tooth brush, the content being placed on the brush. The samples were evaluated in accordance with the following evaluation standard. The evaluation results by 5 panelists are shown in Table 5.

### Evaluation standard

A: hardly any change in taste and aroma
B: some change in taste and aroma
C: definite change in taste and aroma
D: drastic change in taste and aroma

### Comparative Example 7 (control)

Sample was prepared in the same manner as in Example 9 with the exception that ethanol was added in an amount of 0.1% instead of the deterioration preventive agent (b). The sample was subjected to evaluation under the same condition as in Example 9. The results are shown in Table 5.

### Comparative Example 8

Sample was prepared in the same manner as in Example 9 with the exception that 1% ethanol solution of vitamin E mix was added in an amount of 0.1% instead of the deterioration preventive agent (b). The sample was subjected to evaluation under the same condition as in Example 9. The results are shown in Table 5.

**Table 5**

| | | Added concentration (ppm) | Evaluation | Comment |
|---|---|---|---|---|
| Comparative Example 7 | Control | - | D | Aroma totally deteriorates remarkably, and particularly fruity smell decreases drastically. |
| Comparative Example 8 | Vitamin E mix | 10 | D | As in non-addition plot, aroma totally deteriorates remarkably. |
| Example 9 | Deterioration preventive agent (b) | 0.1 | B | Fruity smell and sweetness remain but sweetness derived from mint slightly deteriorates. |
| | | 1 | A | Totally, aroma most resembles that of unaged one, and deterioration is hardly observed. |

In the table, the "added concentration" means the added concentration in terms of solid matter.

As is apparent from the above results, the deterioration preventive agent (b) can significantly improve stability of flavor over the course of time in an added concentration of 0.1 ppm and 1 ppm without affecting smell and appearance of toothpastes.

Thus, it can be said that the agent is effective for preventing deterioration of perfumes in alkaline bases, the deterioration being hitherto a problem.

### Example 10 (Application to a mouthwash)

Food-deterioration preventive ability of the deterioration preventive agent (b) of Example 2 was evaluated with the following samples.

### a) Preparation of samples for evaluation

To a mouthwash base having the following formulation were added 0.1% by weight of a mouthwash flavor (mint-base type) and 0.01% by weight of the deterioration preventive agent (b) of Example 2, whereby a mouthwash was obtained. This mouthwash was packed into two 100 ml transparent glass bottles, and the bottles were tightly closed.

| (% by weight) | |
|---|---|
| Mouthwash base formulation: | |
| 95% ethyl alcohol | 10.00 |
| Polyoxyethylene-hardened | |
| castor oil (EO-60) | 2.00 |
| Conc. glycerin | 10.00 |
| Saccharin sodium | 0.01 |
| Sodium benzoate | 0.05 |
| Monosodium phosphate | |
| monohydrate | 0.06 |
| Sodium hydroxide | appropriate amount |
| | (adjusted to pH 7.8) |
| Purified water | appropriate amount |
| Total | 100.00 |

### (Evaluation method)

The above samples for evaluation were stored in the same manner as in Example 9.

The samples after storage for 2 weeks were taken out and cooled to room temperature. The content (10 to 15 ml) of each bottle was poured into a cup and smelled, and mouth was washed with the content. The degree of deterioration of the samples was evaluated in accordance with the same evaluation standard as in Example 9. The evaluation results by 5 panelists are shown in Table 6.

### Comparative Example 9 (control)

Sample was prepared in the same manner as in Example 10 with the exception that ethanol was added in an amount of 0.01% instead of the deterioration preventive agent (b). The sample was subjected to evaluation under the same condition as in Example 10. The results are shown in Table 6.

### Comparative Example 10

Sample was prepared in the same manner as in Example 10 with the exception that 1% ethanol solution of vitamin E mix was added in an amount of 0.01% instead of the deterioration preventive agent (b). The sample was subjected to evaluation under the same condition as in Example 10. The results are shown in Table 6.

**Table 6**

| | | Added concentration (ppm) | Evaluation | Comment |
|---|---|---|---|---|
| Comparative Example 9 | Control | - | D | Aroma totally deteriorates remarkably, and particularly fruity smell decreases drastically. |
| Comparative Example 10 | Vitamin E mix | 1 | D | As in non-addition plot, aroma totally deteriorates remarkably. |
| Example 10 | Deterioration preventive agent (b) | 1 | A | Totally, aroma most resembles that of unaged one, and deterioration is hardly observed. |

In the table, the "added concentration" means the added concentration in terms of solid matter.

As is apparent from the above results, the deterioration preventive agent (b) can significantly improve stability of flavor over the course of time in an added concentration of 1 ppm without affecting smell and appearance of mouthwash.

### Example 11 (Application to a detergent for automatic dish washer)

Fragrance-deterioration preventive ability of the deterioration preventive agent (b) of Example 2 was evaluated with the following samples.

### a) Preparation of a sample for evaluation

A fragrance-containing detergent for automatic dishwasher having the following formulation was prepared.

| (% by weight) | |
|---|---|
| Formulation: | |
| Water | 27.14 |
| Bentonite (Polargel T) | 1.00 |
| Monostearyl phosphate | 0.16 |
| Sodium hydroxide | |
| (solid matter 49%) | 4.00 |
| Sodium carbonate | 4.50 |
| Sodium silicate RU | 14.00 |
| Sodium hypochlorite (5.25%) | 23.00 |
| Calcium tripolyphosphate (Ca-TPP) | 24.00 |
| Sodium decylphenyl ether | |
| sulfate (Dowfax 3B-2) | 1.20 |
| Citrus-base fragrance | 1.00 |
| Total | 100.00 |

In this connection, the above citrus-base fragrance was obtained by adding the deterioration preventive agent (b) in an amount of 1% to a citrus-base fragrance.

### Comparative Example 11

Sample was prepared in the same manner as in Example 11.

In a control plot, ethanol was added in an amount of 1% instead of the deterioration preventive agent (b).

The above-prepared fragrance-containing detergent for automatic dishwasher were stored at 40°C for 2 months, and then, evaluated in accordance with the following evaluation standard.

The evaluation results by 5 panelists are shown in Table 7.

### Evaluation standard

A: Hardly any change is observed.
B: Some change is observed.
C: Drastic change is observed.

**Table 7**

| | | Evaluation | Comment |
|---|---|---|---|
| Comparative Example 11 | Control | C | Remarkable change is observed in appearance (coloration). Considerable change is observed in aroma. |
| Example 11 | Deterioration preventive agent (b) | A | Hardly any change is observed in both of appearance (coloration) and quality of aroma. |

### Industrial Applicability

The characteristic of the deterioration preventive agent of the invention is to contain a sterol as the active ingredient. By blending the deterioration preventive agent of the invention containing the sterol into foods, retention of food quality for a long period of time is enabled. In addition, the invention is economically advantageous since it is enough to blend a small amount of the deterioration preventive agent. Also, by blending the deterioration preventive agent of the invention containing the sterol into fragrance-containing products, retention of quality of fragrance-containing products for a long period of time is enabled. In addition, the invention is economically advantageous since it is enough to blend a small amount of the deterioration preventive agent for fragrance-containing products.

In addition, the deterioration preventive agent for fragrance-containing products of the invention is excellent in an effect to prevent the deterioration of non-fragrance containing products.

While the invention has been described in detail and with reference to specific embodiments thereof, it will be apparent to one skilled in the art that various changes and modifications can be made therein without departing from the spirit and scope thereof.

This application is based on Japanese patent applications No. 2001-349799 and No. 2001-349800 both filed on November 15, 2001, the entire contents thereof being hereby incorporated by reference.

## Claims

1. The use of a sterol having a skeleton represented by the following formula 1: 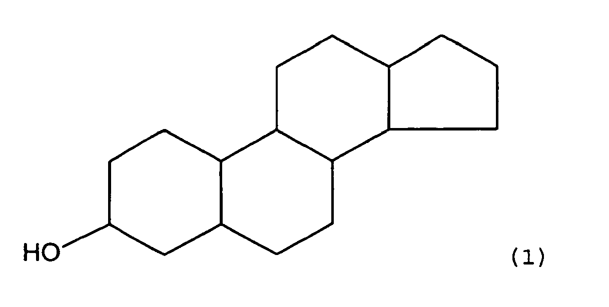 as a deterioration preventive agent for perfume-containing products in alkaline conditions.

2. The use according to claim 1, wherein said sterol is obtained from:
- a vegetable selected from the group consisting of Japanese radish leaves, lettuce, asparagus, cucumber, egg bonnet, oriental pickling melon, garlic, horsetail and Japanese ginger, grains or plant seeds such as unpolished rice, rice bran, buckwheat, sesame seeds, sunflower seeds, walnuts, peanuts and rapeseeds, soybean or soybean-derived products such as bean-curd refuse, rice oil, sesame oil, rape oil, cottonseed oil, olive oil, soybean oil, palm oil, coconut oil;
- a yeast;
- an animal oil selected from the group consisting of whale and tallow; or
- a fish oil.

3. The use according to claim 1 or 2, wherein said sterol has 27 to 30 carbon atoms.

4. The use according to any one of claims 1 to 3, wherein said sterol is sito sterol, stigma-sterol, campe-sterol, spina-sterol or brassica-sterol, or glycerides thereof.

5. The use according to any one of claims 1 to 4, wherein said perfume-containing product is a food.

6. The use according to claim 5, wherein said food is a drink, a frozen confection, a dessert, a fermented milk food, a dairy product, a confection or a fish paste.

7. The use according to any one of claims 1 to 4, wherein said perfume-containing product is a cosmetic, a toiletry product, a domestic cleaning product, a detergent for lavatories, a detergent for bathrooms, a powder detergent for washing, a detergent for automatic dishwasher, a fabric softener or a deodorant.

8. The use according to claim 7, wherein said cosmetic is a perfume.

## Patentansprüche

1. Verwendung eines Sterols mit einem Gerüst, das durch die folgende Formel 1 wiedergegeben wird: 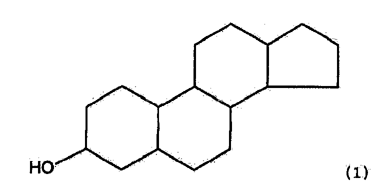 als ein Mittel zur Verhinderung des Verderbs bzw. der Zersetzung für Duftstoff enthaltende Produkte in alkalischen Milieus.

2. Verwendung nach Anspruch 1, wobei das Sterol erhalten wird aus:
- einer Gemüsepflanze ausgewählt aus der Gruppe bestehend aus Blättern des Japanischen Rettichs, Salat bzw. Lattich, Spargel, Gurke, Froschblatt (brasenia schreberi), Gemüsemelone, Knoblauch, Schachtelhalm und Japanischem Ingwer, Körnerfrüchten oder Pflanzensamen wie unpoliertem Reis, Reiskleie, Buchweizen, Sesamsamen, Sonnenblumensamen, Walnüssen, Erdnüssen und Rapssamen, Sojabohnen oder von Sojabohnen abgeleiteten Produkten wie Sojakuchen, Reisöl, Sesamöl, Rapsöl, Baumwollsamenöl, Olivenöl, Sojabohnenöl, Palmöl, Kokosnussöl;
- einer Hefe;
- einem tierischen Öl ausgewählt aus der Gruppe bestehend aus Walöl und Talg; oder
- einem Fischöl.

3. Verwendung nach Anspruch 1 oder 2, wobei das Sterol 27 bis 30 Kohlenstoffatome aufweist.

4. Verwendung nach einem der Ansprüche 1 bis 3, wobei es sich bei dem Sterol um Sitosterol, Stigmasterol, Campesterol, Spinasterol oder Brassicasterol oder Glyceride davon handelt.

5. Verwendung nach einem der Ansprüche 1 bis 4, wobei das Duftstoff enthaltende Produkt ein Nahrungsmittel ist.

6. Verwendung nach Anspruch 5, wobei das Nahrungsmittel ein Getränk, ein gefrorenes Konfekt, ein Dessert, eine fermentierte Milchspeise, ein Molkereiprodukt, ein Konfekt oder eine Fischpaste ist.

7. Verwendung nach einem der Ansprüche 1 bis 4, wobei das Duftstoff enthaltende Produkt ein Kosmetikum, ein Toilettenartikel, ein Hausreinigungsprodukt, ein Detergens für Waschräume bzw. Toiletten, ein Detergens für Badezimmer, ein pulverförmiges Detergens zum Waschen, ein Detergens für eine Geschirrspülmaschine, ein Textilweichspüler oder ein Deodorant ist.

8. Verwendung nach Anspruch 7, wobei das Kosmetikum ein Duftstoff bzw. ein Parfüm ist.

## Revendications

1. Utilisation d'un stérol ayant un squelette représenté par la formule 1 suivante : 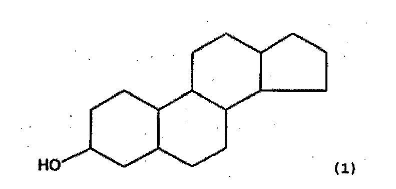 en tant qu'agent anti-dégradation pour des produits contenant des parfums dans des conditions alcalines.

2. Utilisation selon la revendication 1, dans laquelle ledit stérol est obtenu à partir :
- d'un légume choisi dans le groupe constitué de feuilles de radis japonais, de laitue, d'asperge, de concombre, de nénuphar, de melon oriental Shimauri, d'ail, de prêle des champs et de gingembre japonais, de graines ou de semences de plantes telles que le riz brun, le son de riz, le blé noir, les graines de sésame, les graines de tournesol, les noix, les arachides et les graines de colza, le soja ou les produits dérivés du soja tels que les déchets de caillebotte de soja, l'huile de riz, l'huile de sésame, l'huile de colza, l'huile de graine de coton, l'huile d'olive, l'huile de soja, l'huile de palme, l'huile de noix de coco ;
- d'une levure ;
- d'une huile animale choisie dans le groupe constitué d'huile de baleine et de suif ; ou
- d'une huile de poisson.

3. Utilisation selon la revendication 1 ou 2, dans laquelle ledit stérol comprend 27 à 30 atomes de carbone.

4. Utilisation selon l'une quelconque des revendications 1 à 3, dans laquelle ledit stérol est un sito-stérol, un stigma-stérol, un campe-stérol, un spina-stérol ou un brassica-stérol ou des glycérides de ceux-ci.

5. Utilisation selon l'une quelconque des revendications 1 à 4, dans laquelle ledit produit contenant un parfum est un aliment.

6. Utilisation selon la revendication 5, dans laquelle ledit aliment est une boisson, une confiserie glacée, un dessert, un aliment laitier fermenté, un produit laitier, une confiserie ou une pâte de poisson.

7. Utilisation selon l'une quelconque des revendications 1 à 4, dans laquelle ledit produit contenant un parfum est un produit cosmétique, un produit de toilette, un produit de nettoyage domestique, un détergent pour toilettes, un détergent pour salles de bain, un détergent en poudre pour lessive, un détergent pour lave-vaisselle automatique, un adoucissant de tissu ou un déodorant.

8. Utilisation selon la revendication 7, dans laquelle ledit produit cosmétique est un parfum.
